# EUROPÄISCHE PATENTSCHRIFT

(11) **EP 1 824 689 B1**
(45) Veröffentlichungstag und Bekanntmachung des Hinweises auf die Patenterteilung: **18.04.2012**
(21) Anmeldenummer: 05821752.2
(22) Anmeldetag: 09.12.2005
(51) Int. Cl.: B60C 23/04

(54) **ÜBERTRAGUNGSSYSTEM FÜR REIFENZUSTANDSGRÖSSEN**
TRANSMISSION SYSTEM FOR TIRE STATE QUANTITIES
SYSTEME DE TRANSMISSION POUR PARAMETRES D'ETAT DE PNEUS

(30) Priorität: 15.12.2004 DE 102004060751; 09.12.2005 DE 102005059374
(43) Veröffentlichungstag der Anmeldung: 29.08.2007
(73) Patentinhaber: Continental Teves AG & Co. oHG, 60488 Frankfurt am Main (DE)
(72) Erfinder: ACKER, Heinrich, 65824 Schwalbach (DE)
(86) Internationale Anmeldenummer: PCT/EP2005/056650
(87) Internationale Veröffentlichungsnummer: WO 2006/063970

(56) Entgegenhaltungen:
- WO-A-03/031210
- DE-A1- 4 125 695
- US-A- 4 675 638

## Beschreibung

Bremssysteme moderner Kraftfahrzeuge weisen in der Regel eine Anzahl von Sicherheitsfunktionen bzw. Hilfsverfahren wie beispielsweise ein Anti-Blockier-System (ABS) oder ein Elektronisches-Stabilitäts-Programm (ESP) auf, die zu einer Erhöhung der Sicherheit des Kraftfahrzeuges insbesondere beim Bremsen beitragen sollen. Dabei wird zur Steuerung dieser Systeme üblicherweise eine elektronische Steuer- und Regeleinheit (ECU) eingesetzt. Als Eingangssignale dieser Steuer- und Regeleinheit werden verschiedenste Parameter wie insbesondere Reifenzustandsgrößen benötigt. Die Reifenzustandsgrößen sollen vorrangig zur automatisierten Erhöhung der Fahrzeugsicherheit durch elektronisch geregelte Bremsreaktionen dienen. Es besteht darüber hinaus zusätzlich die Möglichkeit, für den Fahrer interessante Informationen, wie beispielsweise den gemessenen Reifendruck, über separate Anzeigeeinheiten dem Fahrer zur Ansicht zur Verfügung zu stellen.

Ein elektromagnetischer Radnabenkoppler zur Übertragung von Signalen über Reifenzustandsgrößen aus einem Rad an ein im Bereich der Fahrzeugkarosserie angeordnetes elektronisches Steuergerät, gemäß dem Oberbegriff des Anspruchs 1, ist aus der DE4125695 A1 und der WO03/03121210 A1 bekannt.

Als Reifenzustandsgrößen werden unter anderem physikalische Zustände, wie zum Beispiel der Innenluftdruck, die Lufttemperatur, die Temperatur des Reifengummis, die Gummiverformung, oder Geräuschspektren des Reifens aber auch Kennwerte bzw. Kennzeichen des Reifens, aus denen Alter, die Bauform oder der Typ des Reifens, wie beispielsweise Sommer- oder Winterreifen, hervorgeht, ermittelt. Außerdem werden beispielsweise für eine Fahrdynamikregelung des Kraftfahrzeugs benötigte Radparameter wie die Reifenquerkraft, das Radmoment oder die Reifenaufstandskraft gemessen.

Die Reifenzustandsgrößen werden üblicherweise an einem, mehreren oder sämtlichen Rädern des Kraftfahrzeuges ermittelt bzw. gemessen. Um die vom rotierenden Rad oder Reifen gemessenen Signale zum Kraftfahrzeug übertragen zu können, wird ein geeignetes Übertragungssystem benötigt. Bei bekannten

Übertragungssystemen, bei denen die Reifenzustandsgrößen über einen aktiven Sensor im Rad an einen Empfänger im Kraftfahrzeug per Funk übertragen werden, ist nachteilig, dass bei üblichen Sendefeldstärken das empfangene Signal in jeder Empfangseinrichtung, ungünstigerweise sogar in einem Nachbarfahrzeug empfangen werden kann, da von den Sendern in der Regel ein gleicher Trägerfrequenzbereich genutzt wird. Bei der Entwicklung einer Übertragungsvorrichtung für Reifenzustandsgrößen besteht bei Anwendung von Hochfrequenz-Verfahren das Problem, dass eine ausreichende Senderreichweite erzielt werden soll, andererseits gleichzeitig eine ausreichende Unterdrückung von Gleichkanalstörungen bzw. andere unerwünschte Verkopplungen zwischen mehreren Sendern und Empfangseinrichtungen zu vermeiden sind.

Um diese Probleme zu vermeiden ist ein sogenannter Nabenkoppler bekannt, mit dem sich berührungslos Daten zwischen dem rotierenden Rad und dem Kraftfahrzeug übertragen lassen. Dabei ist das Funktionsprinzip eine induktive Kopplung von Rad und Kraftfahrzeug. Hierfür ist eine Koppeleinrichtung bzw. ein Nabenkoppler in einer oder mehreren Radnaben des Kraftfahrzeuges angeordnet, wobei die Koppeleinrichtung, zur Erzeugung einer Feldkopplung, aus einem Rotor und einem nicht rotierenden Stator besteht, und dessen eine oder mehrere Feldkoppelelemente sich, durch einen engen Luftspalt getrennt, einander gegenüberstehen, wobei die Kopplung über elektrische Felder und/oder magnetische Felder, und/oder elektromagnetische Felder erfolgt. Der Vorteil dieses Nabenkopplers besteht in der Möglichkeit, nicht nur Signale von Messsystemen zu übertragen, sondern auch Energie zur Versorgung eines Messsystems ins Reifeninnere übertragen zu können. In den Nabenkoppler lässt sich außerdem, zur Versorgung der im Reifeninneren angeordneten Messsysteme, ein Dynamo integrieren.

Die Koppeleinrichtung aus Stator und Rotor weist für eine induktive Kopplung im wesentlichen eine Anzahl von Stator- und Rotorwicklungen auf, wobei diese Wicklungen sowohl als Flach- als auch als Zylinderspulen ausgeführt sein können, und die Wicklungen von Stator und Rotor durch einen schmalen Luftspalt voneinander beabstandet sind. Je nach der gewünschten übertragbaren Leistung und/oder den gewünschten Anforderungen bezüglich einer Abschirmung können Stator- und Rotorkörper im Wicklungsbereich als Ferrit- oder Eisenblechhalbschalen oder Abschirmblechschalen ausgebildet sein. Diese sind in die Wicklungen derart eingebracht, dass diese wie Schalen die Wicklungen von Rotor und Stator gemeinsam nach Art eines Mantelkerns mit dem Luftspalt umfassen.

Nachteilig an dem beschriebenem Nabenkoppler ist, dass für ein Kraftfahrzeug, das sowohl über ein Messsystem mit Nabenkoppler als auch eine ABS-Bremsanlage verfügt, zusätzlich zum Nabenkoppler an jeder Nabe auch ein Raddrehzahlsensor benötigt wird. Problematisch ist, dass Nabenkoppler und Raddrehzahlsensor, je nach Konstruktion, um den gleichen Bauraum konkurrieren. Außerdem kann der Nabenkoppler mit seinem Magnetfeld Störungen am Drehzahlsensor verursachen, weil deren Funktionsweise ebenfalls auf dem Messen von Magnetfeldern beruhen kann.

Ein weiterer Nachteil bei dem Einsatz von Raddrehzahlmessern, die üblicherweise auf Hallsonden oder magnetoresistiven Sensoren beruhen, bei denen die signalgebende Struktur wie beispielsweise ein Encoder, Gitter oder Zahnrad punktförmig abgetastet wird, ist die Gefahr, dass durch fertigungstechnische Toleranzen der signalgebenden Struktur ein sogenannter Polteilungsfehler auftritt, bei dem die Sektoren unterschiedliche Winkel überdecken, so dass bei gleichbleibender Drehzahl eine Schwankung der Momentandrehzahl vorgetäuscht werden kann, was bei Regelsystemen wie beispielsweise bei ABS zu Störungen führen kann.

Der Erfindung liegt daher die Aufgabe zugrunde, eine Übertragungsvorrichtung von Signalen über Reifenzustandgrößen aus einem Rad an ein im Bereich der Fahrzeugkarosserie angeordnetes elektronischer Steuer- oder Auswertegerät, wobei die Reifenzustandsgrößen insbesondere von einer oder mehreren sensorischen Baugruppen erfasst werden können, welche in einem über einer Radnabe rotierbar am Chassis montierten Rad angeordnet sind, anzugeben, wobei die Übertragungsvorrichtung die Ermittlung der Drehzahl des Rads ermöglichen soll.

Diese Aufgabe wird erfindungsgemäß gelöst, indem eine Übertragungsvorrichtung für Kraftfahrzeuge zur Übertragung von Signalen über Reifenzustandsgrößen aus einem Rad an ein im Bereich der Fahrzeugkarosserie angeordnetes elektronisches Auswerte- oder Steuergerät, wobei die Reifenzustandsgrößen insbesondere von einer oder mehreren sensorischen Baugruppen erfasst werden können, welche in einem über Radnabe rotierbar am Chassis montierten Rad angeordnet sind, dadurch gekennzeichnet ist, dass in der Radnabe eine Koppeleinrichtung integriert ist, welche zur Erzeugung einer Feldkopplung aus einem Rotor und einem nicht rotierenden Stator besteht, und dessen eine oder mehrere Feldkoppelelemente sich durch einen engen Luftspalt getrennt, einander gegenüberstehen, und eine Energie- und/oder Signalkopplung über elektrische Felder und/oder magnetische Felder, und oder elektromagnetische Felder erfolgt und der Rotor und/oder der Stator in Umfangsrichtung in zwei oder mehrere Sektoren unterteilt ist, wobei die Sektoren für eine drehzahlabhängige Feldkopplung von Rotor und Stator eine unterschiedliche magnetische Kopplung aufweisen.

Die Erfindung geht dabei von der Überlegung aus, dass für eine Ermittlung der Raddrehzahl an einem Rad, das mit einem Nabenkoppler versehen ist, am besten eine Integration einer Raddrehzahlmessfunktion in den Nabenkoppler erfolgen müsste, weil so die Problematik des sich überschneidenden Bauraums entfallen würde. Die Erfindung geht weitergehend von der Überlegung aus, dass der oben beschriebene Nabenkoppler ein vergleichsweise großes Potential zur Leistungsübertragung aufweist, weil die Nabe des Kraftfahrzeuges, an dem der Nabenkoppler angeordnet ist, in der Regel ein Präzisionsbauteil ist. Daher kann ein sehr geringer Luftspalt zwischen Primär- und Sekundärseite des Nabenkopplers realisiert werden, so dass bereits bei geringen Primärspannungen die übertragbare Leistung deutlich über dem Bedarf von Messschaltungen liegt, wie sie für das rotierende System in Betracht kommt. Eine Reduzierung der Kopplungsleistung aufgrund von Verlusten bei der Messwertaufnahme der Drehzahl durch den Nabenkoppler würde die Versorgung der Messschaltung also nicht beeinträchtigen.

Weitergehend geht die Erfindung von der Überlegung aus, das bereits bei dem vorliegenden Nabenkoppler durch induzierte elektromagnetische Felder eine Kopplung von Primär- und Sekundärseite vorliegt und für eine einfache Realisierung der Drehzahlmessfunktion die Kopplung drehzahlabhängig sein müsste.

Eine Strukturierung von Rotor und Stator mit Sektoren, die eine unterschiedliche Permeabilität aufweisen, bewirkt, dass die magnetische Kopplung zwischen den beiden Seiten des Nabenkopplers bei bestimmten Winkeln eng ist bzw. ein hoher Koppelfaktor vorliegt, während bei anderen Winkeln ein niedrigerer Koppelfaktor vorliegt. Dadurch wird bei einem Verdrehen der beiden Seiten des Nabenkopplers eine Funktion dieses Drehwinkels zwischen den beiden Seiten in die Kopplung integriert, wobei sich die Gesamtdrehfunktion der Raddrehzahl bei einer Rotation aus einer Superposition aller Sektoren zusammensetzt.

Für ein gleichmäßiges Ausgangssignal weisen vorzugsweise aufeinander folgende Sektoren von Rotor und/oder Stator eine in ihrer Höhe alternierende Permeabilität auf.

Alternativ weisen Sektoren vorteilhafterweise in der radial-axialen Ebene eine unterschiedliche Form und/oder ein unterschiedliches Material auf. Wobei sich nur bei der Verwendung ferromagnetischer Materialien oder anderer Materialien, die eine Änderung des Magnetfeldes bewirken bzw. sich auf die Permeabilität auswirken, eine segmentweise unterschiedliche Höhe der magnetischen Kopplung einstellt.

Deshalb ist zweckmäßigerweise in einer Anzahl von Sektoren ferromagnetisches Material vorhanden.

Für eine Integration der Wicklungen des Gehäuses von Rotor und/oder Stator mit den Feldwicklungen mit gleichzeitiger drehzahlabhängiger Feldkopplung setzen sich Rotor und/oder Stator vorzugsweise aus einem Verbundwerkstoff zusammen, wobei sich die Zusammensetzung des Verbundwerkstoffes sektorweise unterscheidet.

Das Joch von Rotorwicklung und/oder Statorwicklung setzt sich für eine geeignete Permeabilität zweckmäßigerweise aus Blech, oder Ferrit, oder nanokristallinen bzw. amorphen ferromagnetischen Legierungen oder kunststoffgebundenen Ferromagnetika zusammen.

Für einen einfachen Aufbau der Vorrichtung ist das Gehäuse von Rotor und/oder Stator und das Joch der Rotorwicklung und/oder Statorwicklung vorteilhafterweise zu einem Bauteil zusammengefasst.

Eine weitere Möglichkeit für eine drehzahlabhängige Feldkopplung wird realisiert, wenn die Rotorwicklung und/oder die Statorwicklung zweckmäßigerweise eine unterschiedliche Anzahl von Windungen in den Sektoren aufweist.

Für eine unterschiedliche Kopplung in den Sektoren ist die Rotorwicklung und/oder die Statorwicklung oder eine Anzahl von Windungen dieser vorteilhafterweise sektorweise in unterschiedlicher axialer oder radialer Lage ausgeführt.

Die mit der Erfindung erzielten Vorteile bestehen insbesondere in der Möglichkeit, bei einem Nabenkoppler eine Drehzahlmessfunktion zu integrieren. Dadurch reduziert sich ein Zusatzaufwand für die Funktion der Drehzahlmessung gegenüber einem separaten Drehzahlsensor ganz erheblich. Zusätzlich lässt sich der bei herkömmlichen Drehzahlsensoren auftretende Polteilungsfehler deutlich reduzieren, da gemäß der vorliegenden Erfindung die Rotation über alle Sektoren gemittelt gemessen wird.

Bei der Betrachtung sämtlicher Funktionen, die der beschriebene Nabenkoppler erfüllen kann, wie Signalübertragung verschiedenster Reifenzustandsgrößen, die Energieversorgung von Messsystemen im Radinneren sowie die Drehzahlmessfunktion, lässt sich ein niedriger Preis pro Funktion erreichen, so dass sich die Einsatzmöglichkeit eines beschriebenen Nabenkopplers in ein Kraftfahrzeug aufgrund eines niedrigen Kosten/Nutzen- Verhältnisses erhöht.

Weitere bevorzugte Ausführungsformen der Erfindung ergeben sich aus den Unteransprüchen und der nachfolgenden Figurenbeschreibung, welche zur näheren Erläuterung der Erfindung dient. Darin zeigt
- Figur 1: ein Übertragungssystem für Reifenzustandsgrößen,
- Figur 2: eine Prinzipdarstellung für das Übertragungssystem mit zwei separaten Koppelpfaden,
- Figur 3: ein Übertragungssystem mit Flachspulen,
- Figur 4: im Schnitt einen Schnitt durch den Rotor 6a und Stator 6b des Übertragungssystems,
- Figur 5: im Schnitt eine Aufsicht auf Rotor 6a und Stator 6b, die
- Figuren 6 bis 12: die Teilschnitte A-A und B-B aus Figur 5 mit verschiedenen Ausführungen von Rotor 6a und Stator 6b,
- Figur 13: im Schnitt die Aufsicht auf eine Wicklung von Rotor 6a oder Stator 6b in axialer Richtung,
- Figur 14: eine elektronische Auswerteschaltung, und
- Figur 15: die Spannungsverläufe der Auswerteschaltung in Figur 14.

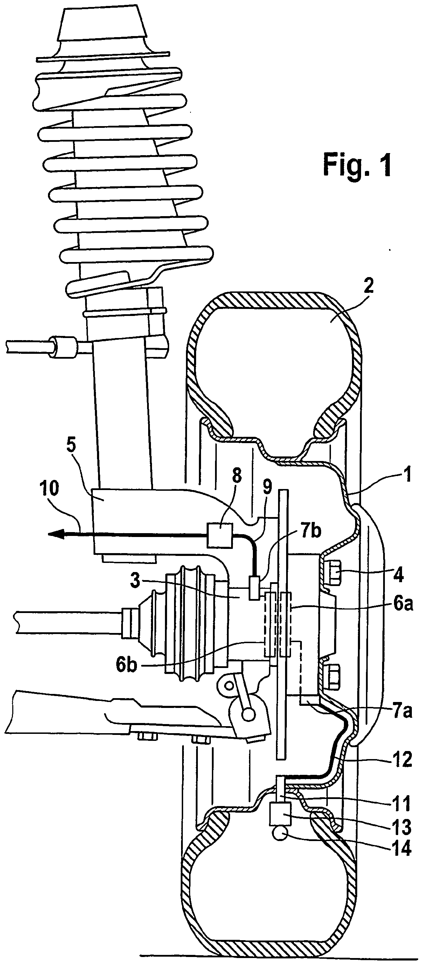

In Figur 1 ist schematisch ein Übertragungssystem in der Form eines Nabenkopplers für Reifenzustandsgrößen dargestellt, welches aus einer Radeinheit und einem mit dem Rad lösbar verbundenem Nabenkoppler besteht, der mit dem Chassis eines Kraftfahrzeuges verbunden ist. Das Rad besteht aus Felge 1 und Reifen 2 und ist an der Nabe 3 mittels Schrauben 4 verbunden. Die Nabe 3 enthält zumindest ein oder auch mehrere Lager und bildet die mechanische Schnittstelle zwischen dem rotierenden Rad und bezüglich des Rades ortsfesten Teilen, wie den Achsschenkeln 5 des Fahrzeugchassis. Zur Übertragung der Reifenzustandsgrößen ist in Radnabe 3 der Rotor 6a und ein nicht rotierender Stator 6b integriert. Im Nabenkoppler stehen sich die elektrisch wirksamen elektromechanischen Koppelelemente nur durch einen engen Luftspalt 24 getrennt einander gegenüber, wobei eine Energie und Signalkopplung über elektromagnetische Felder erfolgt.

Der elektrische Zugang zum Nabenkoppler ist rotorseitig durch den Steckverbinder 7a und statorseitig durch den Steckverbinder 7b realisiert. In der Nähe der Nabe 3, am ortsfesten Achsschenkel 5, ist eine gehäuste elektronische Baugruppe 8 angeordnet, die elektronische Schaltkreise zur Signalaufbereitung und Wechselstromspeisung des Nabenkopplers enthält und die über Steckerkabel 9 mit diesem verbunden ist. Zwischen Baugruppe 8 und der nicht näher dargestellten elektronischen Steuer- und Regeleinheit (ECU) des Kraftfahrzeuges besteht eine elektrische Verbindung 10. In der Felge 1 existiert ein weiterer Steckverbinder 11, wobei dieser im Ausführungsbeispiel als Steckdose ausgeführt ist und insbesondere als Bestandteil der Felge 1 eine Felgensteckdose ausbildet. In Felge 1 ist das Steckerkabel 12 integriert, welches den Nabenkoppler und die Felgensteckdose elektrisch miteinander verbindet. An der Innenseite der Felge 1 ist Baugruppe 13 angeordnet, die zur Energieversorgung einer Messvorrichtung 14 dient. Die Messvorrichtung 14 enthält dafür eine Anzahl von Sensoren und dient zur Erfassung einer oder mehrerer spezifischer Reifenzustandsgrößen im inneren des Reifens 2.

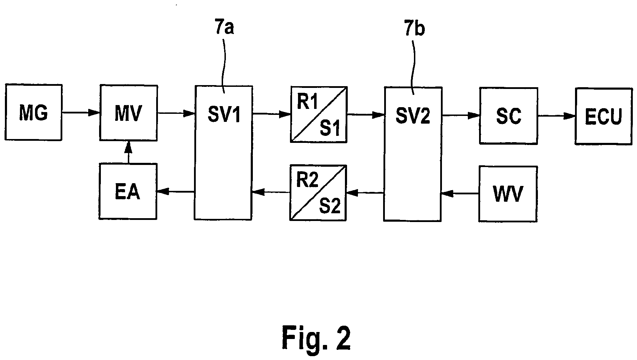

Im Ausführungsbeispiel ist das Übertragungssystem bzw. der Nabenkoppler mit zwei separaten Koppelpfaden ausgelegt, wie in Figur 2 dargestellt ist. Dabei dient ein Koppelpfad R1/S1 zur Signalübertragung von der Messvorrichtung 14 zum Kraftfahrzeug und der andere Koppelpfad R2/S2 zur halbaktiven Energieversorgung der Messvorrichtung 14. Zu diesem Zweck ist in Baugruppe 8 neben der Aufbereitungsstufe zusätzlich eine Wechselstromversorgung WV angeordnet, die über die Steckverbindung SV2 7b mit dem Nabenkoppler R/S (6a, 6b) verbunden ist. Die Steckverbindung SV1 führt zu einer Energieaufbereitungsstufe EA in Baugruppe 13, in der, nach dem Gleichrichten und Glätten, eine Gleichspannung zum Betrieb der Messvorrichtung MV 14 bereitgestellt wird. Die beiden Koppelpfade werden jeweils für einen hohen Wirkungsgrad mit einer geeigneten unterschiedlichen Frequenz betrieben.

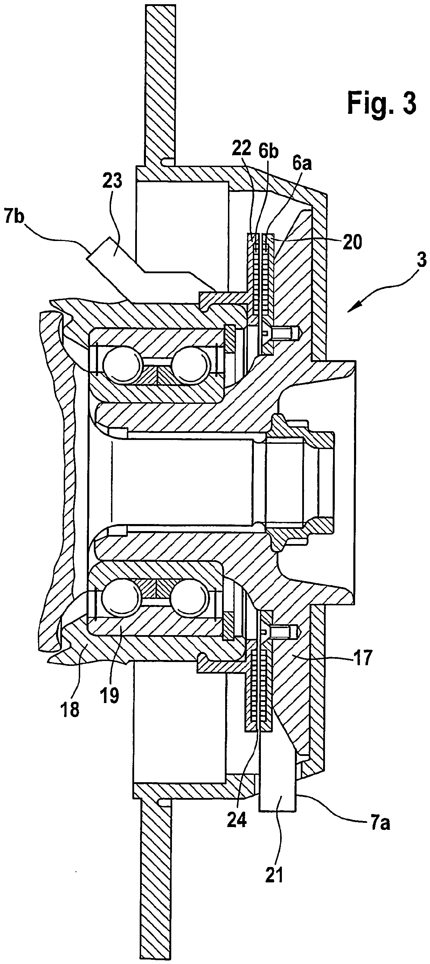

Für eine deutlichere Übersicht der Übertragungsvorrichtung ist in Figur 3 schematisch ein vergrößerter Nabenkoppler dargestellt, wobei Rotor 6a und Stator 6b für die Erzeugung des elektromagnetischen Feldes mit Flachspulen versehen sind, die in Umfangsrichtung verlaufen. Die Rotorwicklung 20 und die Statorwicklung 22 sind dabei jedoch vereinfacht dargestellt, so dass sich die separaten Koppelpfade anhand der Figur 3 nicht erkennen lassen.

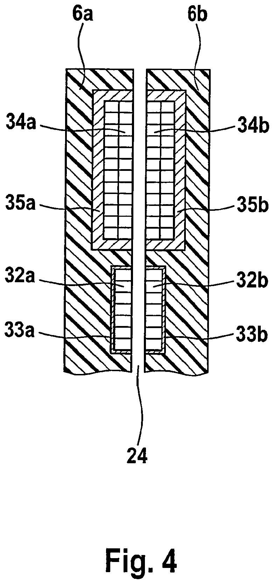

In Figur 4 ist deshalb ein Ausschnitt des Rotors 6a und des Stators 6b im radialen Schnitt dargestellt. Dabei weist der Koppelpfad für die Signalübertragung rotor- und statorseitig jeweils eine einlagige Wicklung 32a und 32b auf, die in Abschirmblechen 33a und 32b eingebettet sind. Die zwei zweilagigen Wicklungen 34a und 34b, die in die Ferritschalen 35a und 35b eingebettet sind, dienen zur Kopplung der Energieübertragung mit Wechselstrom vom Stator 6b zum Rotor 6a und werden mit einer niedrigeren Frequenz betrieben als die Wicklungen 32a und 32b. Die Ausführung der Wicklungen bezüglich Anzahl von Kopplungen, Anzahl der Lagen, Art der Einbettung und des Materials von Rotor 6a und Stator 6b kann je nach der gewünschten speziellen Anwendung entsprechend angepasst und variiert werden. Eine bevorzugte Ausführungsform hat keine getrennten Koppelpfade.

Im folgenden wird eine spezielle Ausgestaltung von Rotor 6a und Stator 6b beschrieben, die dazu dient mit dem Nabenkoppler, zusätzlich zu den Funktionen von Energie- und Signalübertragung, die Raddrehzahl zu erfassen. Dabei wird diese Anwendung auf zwei sich gegenüberliegende Wicklungspakete von Rotor 6a und Stator 6b bezogen, und nicht genau spezifiziert auf welche zuvor beschriebene Kopplungswicklungen sich dies bezieht, da diese Anwendung vom Prinzip her mit allen Arten von Kopplungswicklungen möglich ist.

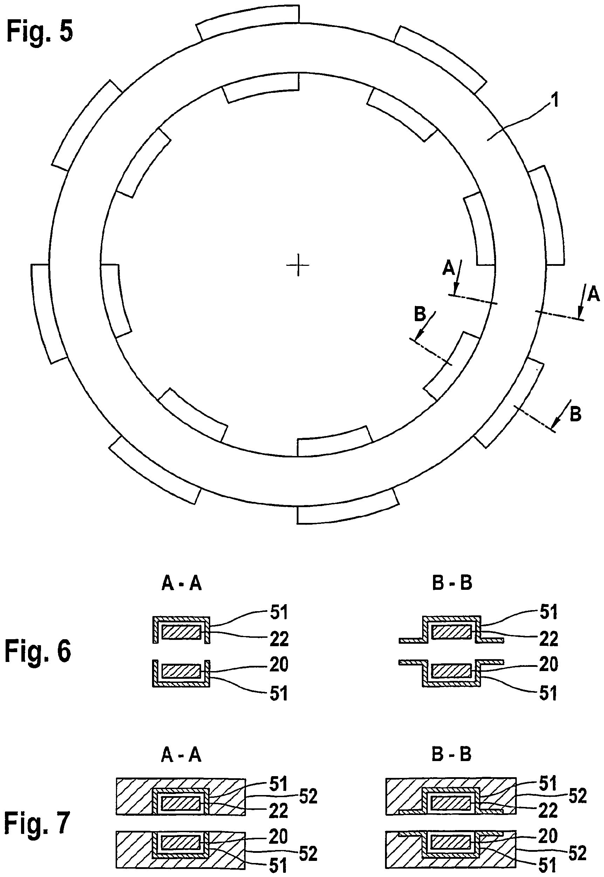

Für ein drehzahlabhängiges Koppelverhalten weisen Rotor 6a und Stator 6b in Umfangsrichtung Segmente unterschiedlich hoher magnetischer Kopplung bzw. hierfür eine sektorweise unterschiedliche Permeabilität auf. Wie Figur 5 zeigt, ist dafür der Rotor 6a und der Stator 6b in jeweils 16 Sektoren zu jeweils 22,5° eingeteilt, wobei Sektoren mit Schnitt A-A und Sektoren mit Schnitt B-B alternierend angeordnet sind. In der Aufsicht ist lediglich das Joch 51 der Sekundärseitenwicklung bzw. des Rotors 6a sichtbar. Dieses Joch schließt die Rotorwicklung 20 ein. Unterhalb des Rotors 6a befindet sich der Stator 6b mit der Statorwicklung 22 die in dem Joch 51 der Primärseite eingebettet ist.

Für die alternierende Höhe der Permeabilität bzw. der magnetischen Kopplung sind verschiedene Ausführungen von Rotor 6a und Stator 6b möglich, die in den Figuren 6 bis 11 dargestellt sind. Dabei zeigt Schnitt A-A jeweils ein Segment mit niedriger magnetischer Kopplung und Schnitt B-B ein Segment mit hoher magnetischer Kopplung.

In Figur 6 ist für eine hohe magnetische Kopplung das Joch 51 von Rotor 6a und Stator 6b mit einem seitlichen Flansch versehen, so dass sich durch den erhöhten Luftspaltquerschnitt im Schnitt B-B bei Betrieb ein niedriger magnetischer Widerstand einstellt.

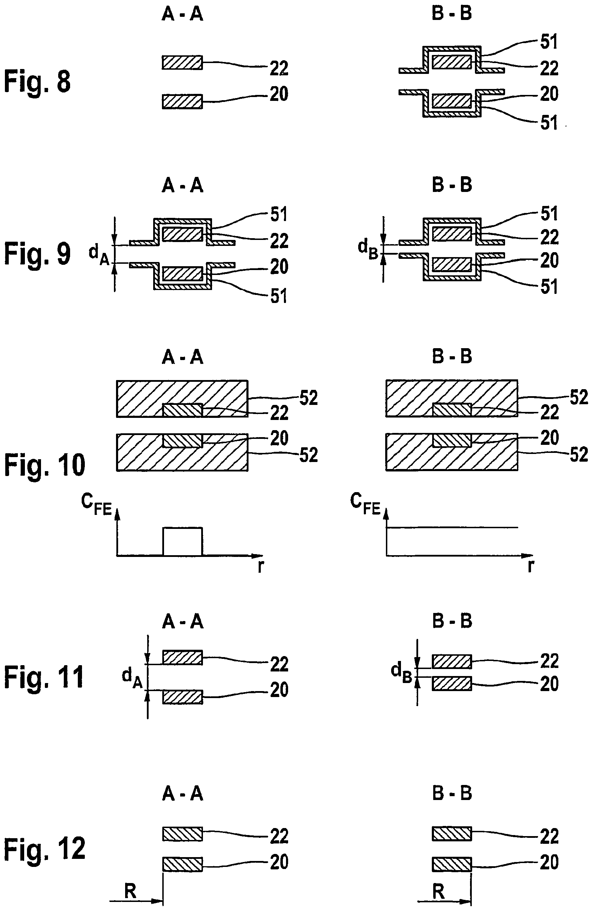

In Figur 7 wird das gleiche Prinzip realisiert, wobei das Joch 51 von Rotor 6a und Stator 6b für eine bessere Stabilität und Befestigung an der Nabe 3 in eine Gehäuse 52 eingelassen ist. In Figur 8 wird eine alternierende magnetische Kopplungshöhe durch Sektoren im Schnitt A-A realisiert, die kein Joch bzw. Jochfläche aufweisen und daher dort die magnetische Kopplung niedriger ausfällt.

In Figur 9 wird für eine unterschiedliche Kopplung der Segmente ein unterschiedlich großer Luftspalt 24 gewählt. Für eine niedrige Kopplung wird dieser in axialer Richtung größer als der für Segmente mit einer höheren Kopplung gewählt.

In Figur 10 wird eine segmentweise unterschiedliche magnetische Kopplung realisiert, indem für das Gehäuse 52 ein Verbundwerkstoff mit unterschiedlichen Ferritkonzentrationen eingesetzt wird und sich damit eine unterschiedliche Permeabilität einstellt. Die Rotorwicklung 20 und Statorwicklung 22 werden dabei direkt in das Gehäuse 52 integriert, so dass ein Joch als separates Bauteil entfällt.

In Figur 11 ist für die Segmentierung ebenfalls der Luftspalt 24 jeweils unterschiedlich groß gewählt, wobei bei dieser Ausführung kein ferromagnetisches Joch verwendet wird. Eine ähnliche Anordnung wird in Figur 12 realisiert wobei hier der im Gegensatz zu Figur 11 der radiale Abstand statt der radiale Abstand von Rotorwicklung 20 und Statorwicklung 22 unterschiedlich groß gestaltet wird.

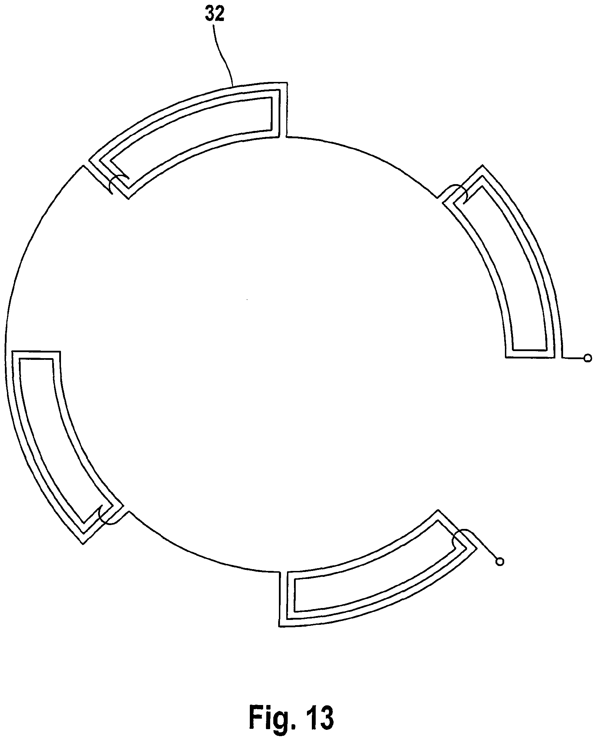

In Figur 13 ist im Schnitt die Aufsicht auf eine Wicklung 32 von Rotor 6a oder Stator 6b in axialer Richtung dargestellt. Bei dieser Anordnung wird eine unterschiedliche segmentweise magnetische Kopplung realisiert, indem sich die Windungen alternierend auf die Sektoren konzentrieren.

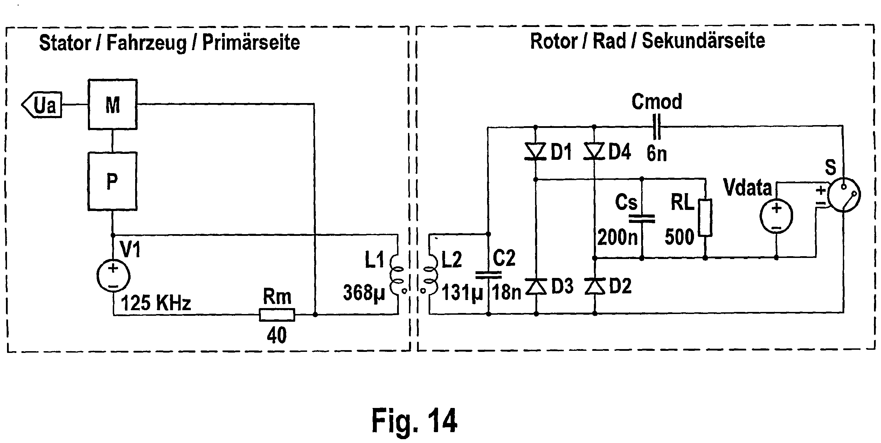

In Figur 14 ist eine geeignete Messschaltung zur Drehzahlermittlung der beschriebenen Anordnung dargestellt. Dabei verursacht die Spannungsquelle V1 einen Strom in der Primärspule L1 mit einer Frequenz von 125 kHz. Die Pulsquelle hat eine Amplitude von 5V. L1 ist über den Nabenkoppler (L1, L2) mit C2 gekoppelt. Die in den Sekundärkreis (L2, C2) induzierte Spannung wird mit einem Brückengleichrichter (D1,D2, D3,D4) gleichgerichtet und mit Cs gesiebt. Die Nutzschaltung bestehend aus Sensor und Signalverarbeitung ist als Verbraucher durch den Lastwiderstand RL modelliert. Der Ausgang dieser Schaltung, an der die gemessenen Daten vorliegen, wird durch die Quelle Vdata modelliert. Diese öffnet und schließt den Schalter S der als Schalttransistor ausgeführt ist. Dadurch wird dem Resonanzkreis L2, C2 entsprechend Vdata der Kondensator Cmod hinzugefügt. Die resultierende Änderung der Resonanzfrequenz bewirkt eine Änderung der Spannung am Messwiderstand Rm. Diese Spannung wird im Multiplizierer M demoduliert, um ein Ausgangssignal ohne den 125 KHz-Träger aus V1 zu erhalten. Dazu wird die Spannung dem Multiplizierer M ebenfalls über das Phasenschiebernetzwerk P zugeführt, das im Ausführungsbeispiel ein RC-Glied ist.

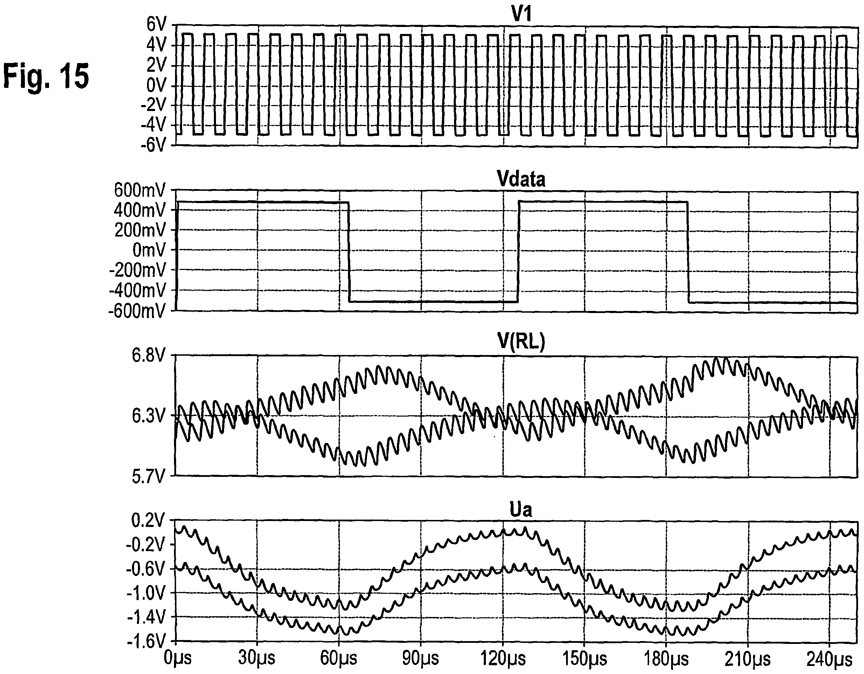

Die sich ergebenden Spannungen sind in Figur 15 dargestellt. V1 ist eine Recheckspannung mit +/- 5V bei 125 KHz. Vdata wird durch eine Recheckspannung von 8 KHZ simuliert. Beide Signale finden sich in der Spannung V (RL) am Lastwiderstand RL, die Spannungsänderungen sind jedoch vergleichsweise gering. Die Spannung am Ausgang der Schaltung auf der Fahrzeugseite Ua folgt deutlich der Datenquelle Vdata, so dass die Messdaten aus Ua zurückgewonnen werden können. Die beiden Kurven Ua repräsentieren den Verlauf bei einem maximalen Koppelfaktor k1 und einem minimalen Koppelfaktor k2 in zwei verschiedenen Positionen der Verdrehung von Primär- und Sekundärseite des Nabenkopplers. Die Drehzahl lässt sich über eine Messung des Mittelwerts von Ua ermitteln.

### Bezugszeichenliste

- 1: Felge
- 2: Reifen
- 3: Nabe
- 4: Schraube
- 5: Achsschenkel
- 6a: Rotor
- 6b: Stator
- 7: Steckverbinder
- 8: Baugruppe
- 9: Steckerkabel
- 10: elektrische Verbindung
- 11: Steckverbinder
- 12: Steckerkabel
- 13: Baugruppe
- 14: Messvorrichtung
- 17: drehbar gelagerter Teil der Nabe
- 18: feststehender Teil der Nabe
- 19: Kugellager
- 20: Rotorwicklung
- 21: Steckdose
- 22: Statorwicklung
- 23: Steckdose
- 24: Luftspalt
- 32: Wicklung
- 33: Abschirmblechschale
- 34: Wicklung
- 35: Ferritschalen
- 51: Joch
- 52: Gehäuse

## Patentansprüche

1. Übertragsvorrichtung für Kraftfahrzeuge zur Übertragung von Signalen über Reifenzustandsgrößen aus einem Rad an ein im Bereich der Fahrzeugkarosserie angeordnetes elektronisches Auswerte- oder Steuergerät, wobei die Reifenzustandsgrößen insbesondere von einer oder mehreren sensorischen Baugruppen (14) erfasst werden können, welche in einem über Radnabe (3) rotierbar am Chassis montier-ten Rad angeordnet sind, und in der Radnabe eine Koppeleinrichtung integriert ist, welche zur Erzeugung einer Feldkopplung aus einem Rotor (6a) und einem nicht rotierenden Stator (6b) besteht, und dessen eine oder mehrere Feldkoppelelemente (20, 22, 34a, 34b, 39a, 39b) sich, durch einen engen Luftspalt (24) getrennt, einander gegenüberstehen, wobei eine Energie- und/oder Signalkopplung über elektrische Felder und/oder magnetische Felder, und oder elektromagnetische Felder erfolgt, **dadurch gekennzeichnet, dass** der Rotor (6a) und/oder der Stator (6b) in Umfangsrichtung in zwei oder mehrere Sektoren unterteilt ist, wobei die Sektoren für eine drehzahlabhängige Feldkopplung von Rotor (6a) und Stator (6b) eine unterschiedliche magnetische Kopplung aufweisen.

2. Vorrichtung nach Anspruch 1, **dadurch gekennzeichnet, dass** in Umfangsrichtung von Rotor (6a) und/oder Stator (6b) aufeinander folgende Sektoren eine in ihrer Höhe alternierende Permeabilität aufweisen.

3. Vorrichtung nach einem der Ansprüche 1 oder 2, wobei die Sektoren in der radial-axialen Ebene eine unterschiedliche Form und/oder ein unterschiedliches Material aufweisen.

4. Vorrichtung nach einem der Ansprüche 1 bis 3, wobei in einer Anzahl von Sektoren hin ferromagnetisches Material vorhanden ist.

5. Vorrichtung nach einem der Ansprüche 1 bis 4, wobei ein Rotor (6a) und/oder Stator (6b) sich aus einem Verbundwerkstoff zusammensetzen und sich die Zusammensetzung des Verbundwerkstoffes sektorweise unterscheidet.

6. Vorrichtung nach einem der Ansprüche 1 bis 5, **dadurch gekennzeichnet, dass** der elektronische Zugang zur Vorrichtung rotorseitig sowie statorseitig durch Steckverbinder realisiert ist.

7. Vorrichtung nach einem der Ansprüche 1 bis 6, **dadurch gekennzeichnet, dass** die Radnabe (3) eine integrierte elektromechanische Signal- und/oder Koppeleinrichtung (6a, 6b) umfasst.

8. Vorrichtung nach einem der Ansprüche 1 bis 7, **dadurch gekennzeichnet, dass** eine kabelförmige elektrische Signalsteckverbindung (7a, 11, 12) von der Nabe zur Messwerterfassungseinrichtung vorgesehen ist.

9. Vorrichtung nach einem der Ansprüche 1 bis 8, **dadurch gekennzeichnet, dass** eine Kabelsteckverbindung (7b, 9) vorhanden ist, die zur Verbindung mit einem gehäusten elektronischen Bauelement (8) und/oder einer Kabelverbindung (10) zu einer elektronischen Regeleinheit (ECU) ausgeführt ist.

10. Vorrichtung nach einem der Ansprüche 1 bis 9, **dadurch gekennzeichnet, dass** die Koppeleinrichtung Flachspulen, bestehend aus einem Rotor mit Rotorwicklung (20) und einem Stator mit Statorwicklung (22), umfasst.

11. Vorrichtung nach einem der Ansprüche 1 bis 10, **dadurch gekennzeichnet, dass** die Koppeleinrichtung mit einander umfassenden Zylinderspulen, bestehend aus einem Rotor mit integrierter Rotorwicklung und einem Stator mit integrierter Statorwicklung, aufgebaut ist.

12. Vorrichtung nach einem der Ansprüche 10 oder 11, wobei die Rotorwicklung (20) und/oder die Statorwicklung (22) eine unterschiedliche Anzahl von Windungen in den Sektoren aufweist.

13. Vorrichtung nach einem der Ansprüche 10 bis 12, wobei die Rotorwicklung (20) und/oder die Statorwicklung (22) oder eine Anzahl von Windungen dieser sektorweise in unterschiedlicher axialer oder radialer Lage ausgeführt sind.

14. Vorrichtung nach einem der Ansprüche 1 bis 13, **dadurch gekennzeichnet, dass** Stator (6a) und/oder Rotor (6b) der Vorrichtung mit Teilen eines oder mehrerer in die Nabe eingebauter Kugellager (19) mechanisch verbunden ist.

15. Vorrichtung nach einem der Ansprüche 1 bis 14, **dadurch gekennzeichnet, dass** sich die Grundkörper von Rotor (6a) und Stator (6b) aus einem magnetisch und elektrisch nicht leitenden Material zusammensetzen.

16. Vorrichtung nach einem der Ansprüche 1 bis 15, **dadurch gekennzeichnet, dass** die Koppeleinrichtung mit zwei oder mehr einlagigen Wicklungen ausgeführt ist, die in Ferritschalen eingebettet sind.

17. Vorrichtung nach einem der Ansprüche 1 bis 16, **dadurch gekennzeichnet, dass** die Koppeleinrichtung mit mehrlagigen Wicklungen die direkt in die zugehörigen Grundkörper eingebettet sind, ausgeführt ist.

18. Vorrichtung nach einem der Ansprüche 1 bis 17, **dadurch gekennzeichnet, dass** die Koppeleinrichtung mit zweilagigen Wicklungen , die in Abschirmblechschalen eingebettet sind, ausgeführt ist.

19. Vorrichtung nach einem der Ansprüche 1 bis 18, **dadurch gekennzeichnet, dass** die Koppeleinrichtung mit zwei oder mehr Wicklungen (32a, 32b), eingebettet in Abschirmblechschalen (33a, 33b), und zusätzlichen zwei oder mehr Wicklungen (34a, 34b), eingebettet in Ferritschalen (35a, 35b), ausgeführt ist.

20. Vorrichtung nach einem der Ansprüche 1 bis 19, wobei das Gehäuse (52) von Rotor (6a) und/oder Stator (6b) und Joch (51) der Rotorwicklung (20) und/oder Statorwicklung (22) zu einem Bauteil zusammengefasst ist.

21. Vorrichtung nach einem der Ansprüche 1 bis 20, wobei das Joch (51) von Rotorwicklung (20) und/oder Statorwicklung (22) sich aus Blech, oder Ferrit, oder nanokristallinen bzw. amorphen ferromagnetischen Legierungen oder kunststoffgebundenen Ferromagnetika zusammensetzt.

22. Vorrichtung nach einem der Ansprüche 1 bis 21, **dadurch gekennzeichnet, dass** in der Koppeleinrichtung zusätzlich ein Dynamo zur Erzeugung einer Versorgungsspannung für den Betrieb der elektronischen Schaltung in der sensorischen Baugruppe integriert ist.

23. Vorrichtung nach Anspruch 22, **dadurch gekennzeichnet, dass** der Dynamo aus einem Ring permanentmagnetischer Segmente auf der Statorseite und Spulenanordnungen (38a) mit Eisenkernen (38b) auf der Rotorseite aufgebaut ist.

24. Sensorisch ausgestattetes Fahrzeugrad umfassend eine Felge (1), einen Luftreifen (2) und eine oder mehrere sensorische Baugruppen (13), welche mit dem Rad rotieren, **dadurch gekennzeichnet, dass** dieses eine Signalverbindung aufweist, die mit der Vorrichtung gemäß einem der Ansprüche 1 bis 23 eine elektrische leitende und lösbare Verbindung bildet.

25. Rad nach Anspruch 24, **dadurch gekennzeichnet, dass** die sensorische Baugruppe ein Sensorelement (14) und eine Signal- und/oder Energieübertragungsbaugruppe (13) umfasst, wobei das Sensorelement und die Signal- und/oder Energieübertragungsbaugruppe insbesondere in einem gemeinsamen Bauelement integriert sind.

26. Rad nach Anspruch 24 oder 25, **dadurch gekennzeichnet, dass** die sensorische Baugruppe eine oder mehreren Sensoren mit einem elektronischen Schaltkreis zur Aufbereitung des oder der Sensorsignale umfasst.

27. Rad nach einem der Ansprüche 24 bis 26, **dadurch gekennzeichnet, dass** in den Reifen eine sensorische Baugruppe integriert ist.

28. Rad nach einem der Ansprüche 24 bis 27, **dadurch gekennzeichnet, dass** eine Energieübertragungsbaugruppe zur Energieversorgung einer sensorischen Baugruppe vorgesehen ist.

29. Rad nach einem der Ansprüche 24 bis 28, **dadurch gekennzeichnet, dass** die elektrische Verbindung zur Übertragsvorrichtung einen Steckverbinder umfasst.

30. Rad nach einem der Ansprüche 24 bis 29, **dadurch gekennzeichnet, dass** die sensorische Baugruppe durch eine in die sensorische Baugruppe integrierte Batterie mit Gleichstromenergie versorgt wird.

31. Rad nach einem der Ansprüche 24 bis 30, **dadurch gekennzeichnet, dass** eine Energieversorgungs- und Signalübertragungsbaugruppe mit einer im Bereich des Reifenmantels ortsfest verankerten sensorischen Messvorrichtung über eine Feldkopplung zur Signalübertragung und/oder Energieversorgung der Messvorrichtung zusammenwirkt, wobei die Energieübertragung insbesondere nach Art eines Transponders erfolgt.

32. Rad nach einem der Ansprüche 24 bis 31, **dadurch gekennzeichnet, dass** die Feldkopplung elektrisch, magnetisch oder elektromagnetisch erfolgt.

33. Rad nach einem der Ansprüche 24 bis 32, **dadurch gekennzeichnet, dass** die Feldkopplung optisch, akustisch, oder über Wärmestrahlung erfolgt.

34. Rad nach einem der Ansprüche 24 bis 33, **dadurch gekennzeichnet, dass** die sensorische Messvorrichtung (15) durch einen in die Messvorrichtung integrierten Generator mit Gleichstromenergie versorgt wird.

35. Rad nach einem der Ansprüche 24 bis 34, **dadurch gekennzeichnet, dass** in die Felge ein Kabel integriert ist, das als Ausgang zur Koppeleinrichtung einen Stecker und auf der Reifenseite eine Felgensteckdose aufweist, die eine elektromechanische Steckverbindung zum Reifeninnenraum ermöglicht und in der die sensorische Baugruppe elektromechanisch ortsfest aufgesteckt und verankert werden kann.

36. Rad nach Anspruch 35, **dadurch gekennzeichnet, dass** die Felgensteckdose in den Felgenkörper ortsfest dergestalt integriert ist, dass sie luftdicht in den Reifenraum ragt.

37. Rad nach einem der Ansprüche 24 bis 36, **dadurch gekennzeichnet, dass** die sensorisch Baugruppe mit sensorisch/elektronischen Mitteln elektrische Reifenzustandssignale erzeugt und diese über die Koppeleinrichtung zur gehäusten elektronischen Baugruppe und/oder elektronischen Regeleinheit (ECU) geleitet werden.

38. Rad nach einem der Ansprüche 24 bis 37, **dadurch gekennzeichnet, dass** die Reifenzustandsgrößen Luftdruck, Lufttemperatur und/oder Reifentemperatur und/oder eine Radaufstandskraft und/ oder ein Bremsmoment und/oder einer Raddrehzahl umfassen.

39. Rad nach einem der Ansprüche 24 bis 38, **dadurch gekennzeichnet, dass** die Reifenzustandsgrößen Kennwerte des Reifentyps und/oder seines Betriebszustandes umfassen.

40. Rad nach einem der Ansprüche 24 bis 39, **dadurch gekennzeichnet, dass** das Rad ein Verbundrad aus Felge und Reifen ist, wobei der Reifen fest mit der Felge verbunden, insbesondere aufvulkanisiert ist.

41. System zur Übertragung von Reifenzustandsgrößen aus einer an einem Kraftfahrzeug montierten Übertragungsvorrichtung gemäß einem der Ansprüche 1 bis 23, welche lösbar mit einem Kraftfahrzeugrad gemäß einem der Ansprüche 24 bis 41 zur Bildung eines elektromechanischen Verbunds befestigt ist.

42. System nach Anspruch 41, **dadurch gekennzeichnet, dass** die sensorische Baugruppe von der gehäusten elektronischen Baugruppe und/oder elektronischen Regeleinheit (ECU) über die Koppeleinrichtung Wechselstromenergie zugeführt bekommt.

43. System nach Anspruch 41 oder 42, **dadurch gekennzeichnet, dass** die sensorische Baugruppe Wechselstromenergie zugeführt bekommt, die durch die Übertragungseinrichtung aus der Rotationsenergie des Rades gewonnen ist.

44. System nach einem der Ansprüche 41 bis 43, **dadurch gekennzeichnet, dass** dieses eine kabelförmige elektrische Signalverbindung zu einer gehäusten elektrischen Bremsenregeleinheit (ECU) umfasst.

## Claims

1. Transmission device for motor vehicles for the purpose of transmitting signals relating to tyre condition variables from a wheel to an electronic evaluation or control unit which is arranged in the region of the bodywork of the vehicle, wherein the tyre condition variables can be acquired in particular by one or more sensor assemblies (14) which are arranged in a wheel which is mounted on the chassis so as to be rotatable by means of the wheel hub (3), and a coupling device, which, in order to generate a field coupling, is composed of a rotor (6a) and a non-rotating stator (6b), is integrated in the wheel hub, and the one or more field-coupling elements (20, 22, 34a, 34b, 39a, 39b) of said stator (6b) are located one opposite the other, separated by a narrow air gap (24), wherein a power coupling and/or signal coupling is formed by means of electrical fields and/or magnetic fields and/or electromagnetic fields, **characterized in that** the rotor (6a) and/or the stator (6b) are divided into two or more sectors in the circumferential direction, wherein the sectors have different magnetic coupling for rotational-speed-dependent field coupling of the rotor (6a) and stator (6b).

2. Device according to Claim 1, **characterized in that** sectors which follow one another in the circumferential direction of the rotor (6a) and/or stator (6b) have alternating permeability over their height.

3. Device according to one of Claims 1 or 2, wherein the sectors in the radial-axial plane are of a different shape and/or different material.

4. Device according to one of Claims 1 to 3, wherein ferromagnetic material is present in a number of sectors.

5. Device according to one of Claims 1 to 4, wherein a rotor (6a) and/or stator (6b) are composed of a composite material, and the composition of the composite material differs on a sector basis.

6. Device according to one of Claims 1 to 5, **characterized in that** the electronic access to the device is implemented at the rotor or stator through plug-type connectors.

7. Device according to one of Claims 1 to 6, **characterized in that** the wheel hub (3) comprises an integrated electromechanical signal-coupling and/or coupling device (6a, 6b).

8. Device according to one of Claims 1 to 7, **characterized in that** an electrical signal plug-type connection (7a, 11, 12) in the form of a cable is provided from the hub to the measured-value-registering device.

9. Device according to one of Claims 1 to 8, **characterized in that** a cable plug-type connection (7b, 9) is provided which is designed to connect to an electronic component (8) with a housing and/or to a cable connection (10) to an electronic control unit (ECU).

10. Device according to one of Claims 1 to 9, **characterized in that** the coupling device comprises flat coils composed of a rotor with a rotor winding (20) and a stator with a stator winding (22).

11. Device according to one of Claims 1 to 10, **characterized in that** the coupling device is constructed with cylinder coils which enclose one another and are composed of a rotor with integrated rotor winding and a stator with integrated stator winding.

12. Device according to one of Claims 10 and 11, wherein the rotor winding (20) and/or the stator winding (22) have a different number of turns in the sectors.

13. Device according to one of Claims 10 to 12, wherein the rotor winding (20) and/or the stator winding (22) or a number of turns thereof are implemented in a different axial or radial position on a sector basis.

14. Device according to one of Claims 1 to 13, **characterized in that** the stator (6a) and/or rotor (6b) of the device are mechanically connected to parts of one or more ball bearings (19) which are built into the hub.

15. Device according to one of Claims 1 to 14, **characterized in that** the base bodies of the rotor (6a) and stator (6b) are composed of a material which is magnetically and electrically non-conductive.

16. Device according to one of Claims 1 to 15, **characterized in that** the coupling device is embodied with two or more single-layer windings which are embedded in ferrite shells.

17. Device according to one of Claims 1 to 16, **characterized in that** the coupling device is embodied with multi-layer windings which are embedded directly in the associated base bodies.

18. Device according to one of Claims 1 to 17, **characterized in that** the coupling device is embodied with two-layer windings which are embedded in sheet-metal screening shells.

19. Device according to one of Claims 1 to 18, **characterized in that** the coupling device is embodied with two or more windings (32a, 32b), embedded in sheet-metal screening shells (33a, 33b), and two or more additional windings (34a, 34b), embedded in ferrite shells (35a, 35b).

20. Device according to one of Claims 1 to 19, wherein the housing (52) of the rotor (6a) and/or the stator (6b) and of the yoke (51) of the rotor winding (20) and/or of the stator winding (23) are combined to form one component.

21. Device according to one of Claims 1 to 20, wherein the yoke (51) of the rotor winding (20) and/or of the stator winding (22) is composed of sheet metal, or ferrite or nano-crystalline or amorphous ferromagnetic alloys or plastic-bound ferromagnetic materials.

22. Device according to one of Claims 1 to 21, **characterized in that** a dynamo for generating a supply voltage for operating the electronic circuit in the sensor assembly is additionally integrated in the coupling device.

23. Device according to Claim 22, **characterized in that** the dynamo is embodied from a ring of permanently magnetic segments, on the stator side and coil arrangements (38a) with iron cores (38b) on the rotor side.

24. Vehicle wheel equipped with sensor means, comprising a rim (1), a pneumatic tyre (2) and one or more sensor assemblies (13) which rotate with the wheel, **characterized in that** said vehicle wheel has a signal connection which is connected in an electrically conductive and detachable fashion to the device according to one of Claims 1 to 23.

25. Wheel according to Claim 24, **characterized in that** the sensor assembly comprises a sensor element (14) and a signal-transmitting and/or energy-transmitting assembly (13), wherein the sensor element and the signal-transmitting and/or energy-transmitting assembly are integrated in particular in a common component.

26. Wheel according to Claim 24 or 25, **characterized in that** the sensor assembly comprises one or more sensors with an electronic circuit for conditioning the sensor signal or signals.

27. Wheel according to one of Claims 24 to 26, **characterized in that** a sensor assembly is integrated into the tyre.

28. Wheel according to one of Claims 24 to 27, **characterized in that** an energy-transmitting assembly is provided for transmitting energy of a sensor assembly.

29. Wheel according to one of Claims 24 to 28, **characterized in that** the electrical connection to the transmission device comprises a plug-type connector.

30. Wheel according to one of Claims 24 to 29, **characterized in that** the sensor assembly is supplied with direct current energy by means of a battery which is integrated into the sensor assembly.

31. Wheel according to one of Claims 24 to 30, **characterized in that** a power supply assembly and/or signal-transmitting assembly interacts with a sensor measuring device, which is anchored in a locationally fixed fashion in the region of the tyre casing, via a field coupling for transmitting signals and/or supplying power to the measuring device, wherein the power transmission is carried out in particular in the manner of a transponder.

32. Wheel according to one of Claims 24 to 31, **characterized in that** the field coupling is formed electrically, magnetically or electromagnetically.

33. Wheel according to one of Claims 24 to 32, **characterized in that** the field coupling is formed optically, acoustically or by means of thermal radiation.

34. Wheel according to one of Claims 24 to 33, **characterized in that** the sensor measuring device (15) is supplied with d.c. power by a generator which is integrated in the measuring device.

35. Wheel according to one of Claims 24 to 34, **characterized in that** a cable, which has a plug as an output to the coupling device and a rim socket on the tyre side, is integrated in the rim, which rim socket permits an electromechanical plug-type connection to the interior of the tyre, and the sensor assembly can be plugged on and anchored, in an electromechanically locationally fixed fashion, in said rim socket.

36. Wheel according to Claim 35, **characterized in that** the rim socket is integrated into the rim body in a locationally fixed fashion in such a way that it projects into the tyre space in an air-tight fashion.

37. Wheel according to one of Claims 24 to 36, **characterized in that** the sensor assembly generates electrical tyre condition signals with sensor/electronic means, and said tyre condition signals are fed via the coupling device to the electronic assembly with a housing and/or electronic control unit (ECU).

38. Wheel according to one of Claims 24 to 37, **characterized in that** the tyre condition variables comprise air pressure, air temperature and/or tyre temperature and/or a wheel contact force and/or a braking torque and/or a wheel rotational speed.

39. Wheel according to one of Claims 24 to 38, **characterized in that** the tyre condition variables comprise characteristic values of the type of the tyre and/or of its operating state.

40. Wheel according to one of Claims 24 to 39, **characterized in that** the wheel is a composite wheel composed of a rim and a tyre, wherein the tyre is permanently connected to the rim, in particular vulcanised onto it.

41. System for transmitting tyre condition variables from a transmission device according to one of Claims 1 to 23 which is mounted on a motor vehicle and which is detachably attached to a motor vehicle wheel according to one of Claims 24 to 41 to form an electromechanical composite.

42. System according to Claim 41, **characterized in that** a.c. power is fed to the sensor assembly from the electronic assembly with a housing and/or electronic control unit (ECU) via the coupling device.

43. System according to Claim 41 or 42, **characterized in that** a.c. power which is acquired from the rotational energy of the wheel by means of the transmission device is fed to the sensor assembly.

44. System according to one of Claims 41 to 43, **characterized in that** said system comprises a cable-shaped electrical signal connection to a housed electrical brake control unit (ECU).

## Revendications

1. Dispositif de transmission pour véhicule automobile destiné à transmettre des signaux concernant des variables d'état de pneumatiques provenant d'une roue à un appareil d'évaluation ou de commande électronique disposé dans la région de la carrosserie du véhicule, dans lequel les variables d'état de pneumatiques peuvent notamment être détectées par un ou plusieurs modules détecteurs (14) qui sont disposés dans une roue montée de manière rotative sur le châssis par l'intermédiaire d'un moyeu de roue (3), et dans lequel un dispositif de couplage est intégré au moyeu de roue, lequel dispositif est constitué d'un rotor (6a) et d'un stator non rotatif (6b) destiné à générer un couplage de champ, et ayant un ou plusieurs éléments de couplage de champ (20, 22, 34a, 34b, 39a, 39b) qui sont disposés en face les uns des autres et sont séparés les uns des autres par un entrefer étroit (24), dans lequel il se produit un couplage d'énergie et/ou de signal par l'intermédiaire de champs électriques et/ou de champs magnétiques et/ou de champs électromagnétiques, **caractérisé en ce que** le rotor (6a) et/ou le stator (6b) est divisé en deux ou plusieurs secteurs dans la direction circonférentielle, les secteurs présentant des couplages magnétiques différents pour un couplage de champ du rotor (6a) et du stator (6b) qui dépend de la vitesse de rotation.

2. Dispositif selon la revendication 1, **caractérisé en ce que** les secteurs consécutifs présentent un niveau de perméabilité alternatif dans la direction circonférentielle du rotor (6a) et/ou du stator (6b).

3. Dispositif selon l'une des revendications 1 ou 2, dans lequel les secteurs présentent dans leur plan radial-axial une forme différente et/ou un matériau différent.

4. Dispositif selon l'une quelconque des revendications 1 à 3, dans lequel un matériau ferromagnétique est présent dans un certain nombre de secteurs.

5. Dispositif selon l'une quelconque des revendications 1 à 4, dans lequel un rotor (6a) et/ou un stator (6b) se composent d'un matériau composite et la composition du matériau composite varie suivant les secteurs.

6. Dispositif selon l'une quelconque des revendications 1 à 5, **caractérisé en ce que** l'accès électronique au dispositif est réalisé par des connecteurs situés du côté du rotor et du côté du stator.

7. Dispositif selon l'une quelconque des revendications 1 à 6, **caractérisé en ce que** le moyeu de roue (3) comprend un dispositif générateur de signal et/ou de couplage électromécanique intégré (6a, 6b).

8. Dispositif selon l'une quelconque des revendications 1 à 7, **caractérisé en ce qu'**une connexion de signal électrique sous la forme d'un câble (7a, 11, 12) est prévue entre le moyeu et un dispositif d'obtention de valeurs de mesure.

9. Dispositif selon l'une quelconque des revendications 1 à 8, **caractérisé en ce qu'**il existe une connexion par câble (7b, 9) qui est mise en oeuvre pour la connexion d'un composant électronique en boîtier (8) et/ou pour la connexion par câble (10) d'une unité de commande électronique (ECU).

10. Dispositif selon l'une quelconque des revendications 1 à 9, **caractérisé en ce que** le dispositif de couplage comprend des bobines plates constituées d'un rotor à enroulement de rotor (20) et d'un stator à enroulement de stator (22).

11. Dispositif selon l'une quelconque des revendications 1 à 10, **caractérisé en ce que** le dispositif de couplage est réalisé à partir de bobines cylindriques mutuellement emboîtées, constituées d'un rotor à enroulement de rotor intégré et d'un stator à enroulement de stator intégré.

12. Dispositif selon l'une des revendications 10 ou 11, dans lequel l'enroulement de rotor (20) et/ou l'enroulement de stator (22) comporte des nombres différents d'enroulements dans les secteurs.

13. Dispositif selon l'une quelconque des revendications 10 à 12, dans lequel l'enroulement de rotor (20) et/ou l'enroulement de stator (22) ou un nombre d'enroulements de ceux-ci sont mis en oeuvre suivant les secteurs à des positions axiales ou radiales différentes.

14. Dispositif selon l'une quelconque des revendications 1 à 13, **caractérisé en ce que** le stator (6a) et/ou le rotor (6b) du dispositif est mécaniquement relié à des parties d'un ou de plusieurs roulements à billes (19) intégrés au moyeu.

15. Dispositif selon l'une quelconque des revendications 1 à 14, **caractérisé en ce que** les corps de base du rotor (6a) et du stator (6b) se composent d'un matériau non magnétiquement et non électriquement conducteur.

16. Dispositif selon l'une quelconque des revendications 1 à 15, **caractérisé en ce que** le dispositif de couplage est réalisé de manière à comporter deux ou plusieurs enroulements monocouches qui sont noyés dans des coquilles de ferrite.

17. Dispositif selon l'une quelconque des revendications 1 à 16, **caractérisé en ce que** le dispositif de couplage est réalisé de manière à comporter des enroulements multicouches qui sont directement noyés dans le corps de base associé.

18. Dispositif selon l'une quelconque des revendications 1 à 17, **caractérisé en ce que** le dispositif de couplage est réalisé de manière à comporter des enroulements à deux couches qui sont noyés dans des coquilles de blindage.

19. Dispositif selon l'une quelconque des revendications 1 à 18, **caractérisé en ce que** le dispositif de couplage est réalisé de manière à comporter deux ou plusieurs enroulements (32a, 32b) noyés dans des coquilles de blindage (33a, 33b), et **en ce que** deux ou plusieurs enroulements (34a, 34b) supplémentaires sont noyés dans des coquilles de ferrite (35a, 35b).

20. Dispositif selon l'une quelconque des revendications 1 à 19, dans lequel le boîtier (52) du rotor (6a) et/ou du stator (6b) et la culasse (51) de l'enroulement de rotor (20) et/ou de l'enroulement de stator (22) sont combinés en un seul composant.

21. Dispositif selon l'une quelconque des revendications 1 à 20, dans lequel la culasse (51) de l'enroulement de rotor (20) et/ou de l'enroulement de stator (22) est fait de tôle ou de ferrite ou d'alliages ferromagnétiques nanocristallins ou amorphes ou de matières ferromagnétiques liées par des matières plastiques.

22. Dispositif selon l'une quelconque des revendications 1 à 21, **caractérisé en ce qu'**une dynamo est en outre intégrée au dispositif de couplage pour générer une tension d'alimentation destinée à entraîner le circuit électronique contenu dans le module détecteur.

23. Dispositif selon la revendication 22, **caractérisé en ce que** la dynamo est réalisée à partir d'un anneau de segment magnétique permanent du côté stator et d'agencements de bobines (38a) comprenant des noyaux de fer (38b) du côté rotor.

24. Roue de véhicule équipée de capteurs comprenant une jante (1), un pneumatique (2) et un ou plusieurs modules détecteurs (13) qui tournent avec la roue, **caractérisée en ce qu'**elle comprend une connexion de signal qui forme avec le dispositif selon l'une quelconque des revendications 1 à 23 une connexion électriquement conductrice et amovible.

25. Roue selon la revendication 24, **caractérisée en ce que** le module détecteur comprend un élément à capteur (14) et un module de transmission de signal et/ou d'énergie (13), l'élément à capteur et le module de transmission de signal et/ou d'énergie étant notamment intégrés dans un composant commun.

26. Roue selon la revendication 24 ou 25, **caractérisée en ce que** le module détecteur comprend un ou plusieurs capteurs munis d'un circuit électronique destiné à traiter le signal ou les signaux de capteurs.

27. Roue selon l'une quelconque des revendications 24 à 26, **caractérisée en ce qu'**un module détecteur est intégré au pneumatique.

28. Roue selon l'une quelconque des revendications 24 à 27, **caractérisée en ce qu'**il est prévu un module de transmission d'énergie destiné à alimenter en énergie un module détecteur.

29. Roue selon l'une quelconque des revendications 24 à 28, **caractérisée en ce que** la connexion électrique comprend un connecteur destiné au dispositif de transmission.

30. Roue selon l'une quelconque des revendications 24 à 29, **caractérisée en ce que** le module détecteur est alimenté en courant continu par l'intermédiaire d'une batterie intégrée au module détecteur.

31. Roue selon l'une quelconque des revendications 24 à 30, **caractérisée en ce qu'**un module de transmission de signaux et d'alimentation en énergie coopère avec un dispositif de mesure à capteurs ancré de manière stationnaire dans la région de l'enveloppe du pneumatique par l'intermédiaire d'un couplage de champ destiné à la transmission de signaux et/ou à l'alimentation en énergie du dispositif de mesure, dans lequel la transmission d'énergie s'effectue notamment à la manière d'un transpondeur.

32. Roue selon l'une quelconque des revendications 24 à 31, **caractérisée en ce que** le couplage de champ s'effectue de manière électrique, magnétique ou électromagnétique.

33. Roue selon l'une quelconque des revendications 24 à 32, **caractérisée en ce que** le couplage de champ s'effectue de manière optique, acoustique ou par rayonnement thermique.

34. Roue selon l'une quelconque des revendications 24 à 33, **caractérisée en ce que** le dispositif de mesure à capteur (15) est alimenté en courant continu par l'intermédiaire d'un générateur intégré au dispositif de mesure.

35. Roue selon l'une quelconque des revendications 24 à 34, **caractérisée en ce qu'**un câble est intégré à la jante, lequel câble comprend en tant que sortie reliée au dispositif de couplage un connecteur et une prise de jante située du côté du pneumatique, qui permet un raccordement électromécanique au volume intérieur du pneumatique et peut être enfichée électromécaniquement de manière fixe et dans laquelle le module détecteur peut être enfiché et ancré électromécaniquement et de manière fixe.

36. Roue selon la revendication 35, **caractérisée en ce que** la prise de jante est intégrée de manière fixe au corps de jante afin qu'elle fasse saillie de manière étanche à l'air dans le volume intérieur du pneumatique.

37. Roue selon l'une quelconque des revendications 24 à 36, **caractérisée en ce que** le module détecteur génère des signaux électriques d'état de pneumatiques par des moyens à capteurs et électroniques et les achemine par l'intermédiaire du dispositif de couplage au module électronique en boîtier et/ou à l'unité de commande électronique (ECU).

38. Roue selon l'une quelconque des revendications 24 à 37, **caractérisée en ce que** les variables d'état de pneumatiques comprennent la pression d'air, la température de l'air et/ou la température du pneumatique et/ou une force de contact de la roue et/ou un moment de freinage et/ou une vitesse de rotation de la roue.

39. Roue selon l'une quelconque des revendications 24 à 38, **caractérisée en ce que** les variables d'état de pneumatiques comprennent des paramètres caractéristiques du type de pneumatique et/ou de son état de fonctionnement.

40. Roue selon l'une quelconque des revendications 24 à 39, **caractérisée en ce que** la roue est une roue composite constituée d'une jante et d'un pneumatique, le pneumatique étant relié de manière fixe à la jante en étant notamment vulcanisé sur celle-ci.

41. Système destiné à la transmission de variables d'état de pneumatiques provenant d'un dispositif de transmission monté sur un véhicule automobile selon l'une quelconque des revendications 1 à 23, qui est fixé de manière amovible à une roue de véhicule automobile selon l'une quelconque des revendications 24 à 41 pour former un assemblage électromécanique.

42. Système selon la revendication 41, **caractérisé en ce que** le module détecteur reçoit un courant alternatif du module électronique en boîtier et/ou de l'unité de commande électronique (ECU) par l'intermédiaire du dispositif de couplage.

43. Système selon la revendication 41 ou 42, **caractérisé en ce que** le module détecteur reçoit un courant alternatif qui est obtenu à partir de l'énergie de rotation de la roue par l'intermédiaire du dispositif de transmission.

44. Système selon l'une quelconque des revendications 41 à 43, **caractérisé en ce qu'**il comprend une connexion de signal électrique sous la forme d'un câble à une unité de commande électrique de freinage (ECU) en boîtier.
